# EUROPEAN PATENT SPECIFICATION

(11) **EP 2 068 534 B1**
(45) Date of publication and mention of the grant of the patent: **01.08.2012**
(21) Application number: 08100300.6
(22) Date of filing: 10.01.2008
(51) Int. Cl.: H04L 29/12, G06F 17/21

(54) **System and method for managing multiple external identities of users with local or network based address book**
System und Verfahren zur Verwaltung mehrerer externen Identitäten von Benutzern über ein lokales oder netzwerkbasiertes Adressbuch
Système et procédé de gestion d'identités externes multiples d'utilisateurs avec un carnet d'adresses local ou basé sur un réseau

(30) Priority: 07.12.2007 US 952804
(43) Date of publication of application: 10.06.2009
(60) Divisional application: 12168423.7
(73) Proprietor: Research In Motion Limited, Waterloo, ON N2L 3W8 (CA)
(72) Inventor: Martin-Cocher, Gaelle, Toronto M6S 2Y2 (CA); Shenfield, Michael, Richmond Hill, Ontario L4C 3S9 (CA); Chitturi, Suresh, Sunnyvale, CA 94089 (US)
(74) Representative: Moore, Barry

(56) References cited:
- WO-A-2007/037842
- US-A1- 2005 289 474

## Description

The present disclosure relates generally to address books, and in particular the managing of contact information in a local and a network address book.

An address book is a book or database used for storing entities called contacts. Each contact entry usually consists of a few standard fields, such as: the first name, the last name, company name, address, telephone number, email address, fax number, cell number, instant messaging contact information, among others.

The information in an address book is usually input or updated manually or can be updated or input using various formats, such as: a lightweight directory access protocol data interchange format (LDIF) or a Versitcard (vCard), among others.

US2005/289474 discloses a system for controlling the display of information shared between users in which, an individual may agree to share his or her contact information with other users, for example, by exchanging one or more vCards of which the individual is considered the owner. The owner has a first relationship with a first user and a second relationship with a second user. Using dynamic electronic presentation skins, which are selected based on the relationships between the parties, the owner's contact information is presented to the first user in a first fashion and presented to the second user in a second fashion. If the relationship between the owner and the first and/or second user changes, a different dynamic presentation skin can be applied to the owner's contact information in the form of a vCard to alter the presentation of the information contained therein.

WO2007/037842 discloses a method of selectively protecting contact information. The method can include sending contact information from a calling party to a called party, selectively hiding portions of the contact information from the called party, and enabling the called party to contact the calling party. The method can further restrict the called party from contacting the called party in a predetermined context such as in relation to time and/or location. The method can further optionally disable the ability for the called party to edit the contact information or the ability for the called party to forward the contact information to a third party. The method can optionally enable the called party to contact the calling party a predetermined number of times or enable to share portions of the contact information with a predetermined group

### GENERAL

The present disclosure may provide for a system and method for defining multiple external identities of the user for the contacts in an address book. A user can create various address subsets such as: an address subset for personal external identity, an address subset for a professional/work external identity, and a subset for a traveling external identity, among others. The subset of fields and/or values of fields exposed to different contacts can be different for each. For example, a user that is to receive a work address subset could receive contact information of a work email address and an instant messaging address. Conversely, a contact that is to receive a personal address subset could receive a home phone number, an email address that contains a different email address than the work email address, a cell phone number, or other information.

A user can specify multiple external identities, which are various subsets of his or her full contact information set exposed to other users. The external identities are either statically predefined by the user or can be created and modified based on user specified rules upon the first or every request from the contact information requestor and can contain/ link to either static or dynamic information. For example, an external identity containing only static information could be provided depending on the name or category of the contact accessing address information. The category can be broken up, for example, to include co-worker's, friends, family, sailing club buddies, among others.

An example of dynamic information contained in an external identity is when this information is established dynamically based on the rules specified by the user and associated with his or her dynamic status. Such dynamic status could include presence, location, time of the day, time zone, or network state, among others. Alternatively, the dynamic information in the external identity could be established based on the external identity of the contact information requestor.

The rules established by the user for building dynamic subset of his or her external identity may operate on static and/or dynamic fields of the receiving party external identity. For example, if an address book is configured to interact with a social networking site, the information about the recipient could be used to build the dynamic subset of user's external identity, for instance if the recipient is defined in this social networking site as user's "friend", the recipient gets a broader set of user's contact information as opposed to the general public. In another example, the user's external identity could depend on whether the receiving party is in the same time zone as the user, whether he or she is currently driving or not, etc.

The address book, in various embodiments, could be tied to other information servers or services. For example, the address book could have knowledge of a contact's presence through a presence server, knowledge of a contact's telephone activities by being integrated with a corporate private branch exchange (PBX), knowledge of a contact's information through a location service or global positioning service (GPS), knowledge of a contact's schedule by being integrated with a contact's calendar, or knowledge of a contact's personal information through integration with a social networking site, among others. The knowledge of the auxiliary information could be used to update or arrange a contact's information to make the information more relevant.

Further, an address book on a mobile device could be synchronized with a network based address book to accomplish the above.

The present disclosure may therefore provide a method for managing multiple external identities of a user with an address book application comprising the steps of: creating one or more external identities for the user, each external identity including at least one address book field and corresponding value; forwarding the one or more external identities to a receiving party; and presenting a selected external identity from the one or more external identities to the receiving party based on at least one of time of day and a state of the user.

The present disclosure may further provide a mobile device adapted to execute an address book application for managing multiple external identities of a user, the mobile device comprising: a processing module adapted to create one or more external identities for the user, each external identity including at least one address book field and corresponding value; a communications module adapted to forward the one or more external identities to a receiving party and adapted to receive external identities (1330) from a third party; and a presentation module adapted to present a selected identity from said received external identities based on at least one of time of day and a state of the third party.

### Summary

Accordingly, a first embodiment relates to a method as detailed in claim 1. A further embodiment relates to a mobile device as detailed in claim 16. Advantageous embodiments are provided in the dependent claims.

### BRIEF DESCRIPTION OF THE DRAWINGS

The present disclosure will be better understood with reference to the drawings in which:
**Figure 1** is an exemplary user interface for a contact with a work external identity;
**Figure 2** is an exemplary user interface for a contact with a home external identity;
**Figure 3** is an exemplary user interface for a contact with a travel external identity;
**Figure 4** is an exemplary user interface for assigning transition information for different external identities;
**Figure 5A** is an exemplary diagram of an address book showing the user interface when scrolling over a particular user;
**Figure 5B** is an exemplary diagram of an address book showing the user interface when clicking on a particular user;
**Figure 6** is an exemplary diagram of an address book showing integration of presence information;
**Figure 7** is an exemplary diagram of an address book showing integration with work status information;
**Figure 8** is an exemplary diagram of an address book showing integration of a corporate PBX;
**Figure 9** is an exemplary diagram of an address book showing integration with GPS information;
**Figure 10** is an exemplary user interface showing a contact having GPS information.
**Figure 11** is an exemplary diagram of an address book showing integration with a social networking server;
**Figure 12** is an exemplary diagram of an address book showing change information in a different font;
**Figure 13** is a block diagram showing the application of masks and contexts to contact data;
**Figure 14** is a block diagram of an exemplary mobile system having a converged address book server;
**Figure 15** is a block diagram of a hierarchical structure for relating external identities, nodes and values; and
**Figure 16** is a flow diagram of an exemplary method according to the present disclosure.

### DESCRIPTION OF PREFERRED EMBODIMENTS

In the address book of a user, the user can save his or her information in various fields. For example, this can include, but are not limited to: the name, email address, a second email address, among others. The address book is either a network based address book (also referred to as a converged address book) or the address book can be a local address book present on a user's device that is synchronized with a network based address book.

The address book provides notification of the user's contact information updated to each receiving party linked to the user. Another means to update a user's address book would be to directly provide updates, for instance in the case when user subscribes to contact changes. Contacts in the address book can be classified under different categories. For example, this includes, but is not limited to, friends, co-workers, family, among others. Notification can be subject to the rules applicable to the category. The address book can further contain additional information, such as a user's presence information (available, busy, offline, among others) and communications presences (short message service (SMS), email, instant messaging (IM), among others).

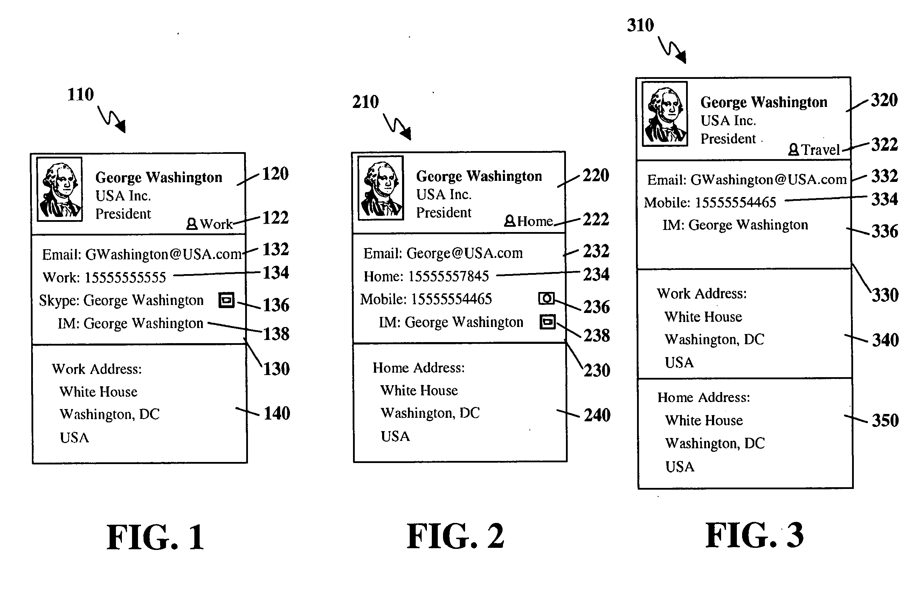

Reference is now made to **Figure 1**. **Figure 1** shows a user's contact information when the person accessing the contact information has been identified as a "work" contact. In **Figure 1**, address subset **110** can include an external identity portion **120** that includes, for example, a user's name, company, and title among others. A field **122** could also indicate the type of external identity that is being shown.

In the example of **Figure 1**, the address subset **110** includes various contact information **130**, including an email address **132**, a work phone number **134**, a Skype ^{™} address **136**, and an IM address **138**.

The address subset **110** further includes a work address **140**.

Referring to **Figure 2**, a home address subset **210** is presented to contacts that have been identified to receive the "home" address subset.

Address subset **210** includes identification information **220** and information about the external identity type **222**.

Further, a contact information area **230** is provided. In contact information area **230**, an email address **232**, a home phone number **234**, a mobile phone number **236**, and an IM address **238** are provided.

A home address field **240** is also provided to contacts receiving the "home" address subset.

Referring to **Figure 3, Figure 3** shows an address subset **310** that is designated as a "travel" address subset. Under the travel address subset **310,** identification field **320** is provided including the name, company and position title. An external identity type field **322** is also presented in some embodiments.

A contact information area **330** is provided in address subset **310.** Contact information **330** includes an email address **332,** a mobile phone number **334,** and an instant messaging address **336.**

Further, address subset **310** includes a work address **340** and a home address **350.**

When comparing **Figures 1, 2** and **3****,** it will be apparent to those skilled in the art that both the fields and the information within the fields change based on the type of address subset. Specifically, in **Figure 1****,** the work address subset **110** includes a work email address that is different from the home email address **232** in address subset **210** of **Figure 2****.**

Also, the instant messaging contact information **138** from **Figure 1** is different from that of **336** of **Figure 3****.** Thus, both the fields that are presented to a user and the information within these fields can vary based on the address subset.

The above references to **Figures 1, 2** and **3** therefore provide for address subsets to be set based on the static information of the category of receiving party.

The above could be, for example, implemented using an extension to the vCard. A standard vCard example includes:
BEGI N:VCARD
VERSION:3.0
FN:Joe Smith
TEL;WORK: +1-111-111-1111
TEL;HOME: +1-222-222-2222
TEL;CELL:+1-333-333-3333
URL: http://www.example.org/joesmith
EMAIL; INTERNET:joe.smith@example.org
END:VCARD

As will be appreciated by those skilled in the art, an "hCard" is an hypertext markup language (HTML) vCard and is a microformat for publishing contact information in Atom, RSS, or arbitrary XML. Mapping of Standard vCard to hCard example:

```
       <div id="hcard-Joe-Smith" class=vcard">
              <a class="url fn" href="hftp://www.example.org/joesmith">Joe Smith</a>
              <a class="email"
       href="mailto:joe.smith@example.org">joe.smith@example.org</a>
              <div dass="tel">
                    <span class="type"> WORK</span> +1-111-111-1111
              </div>
              <div class="tel">
                    <span class="type"> HOME</span> +1-222-222-2222
              </div>
              <div class="tel">
                    <span class="type"> CELL</span> +1-333-333-3333
              </div>
       </div>
```

The above could be extended by adding two fields to a vCard format. These fields include:
1) VIEW EXTERNAL IDENTITY - A view external identity type will indicate the view external identity this vCard will represent. Therefore, for multiple external identity of the same user multiple vCard's need to be created with a different matching view external identity value and associated information;
2) VIEW SKIN URL - A view skin uniform resource locator (URL) represents the URL to the "skin" of the UI that should be applied to the current external identity view.

With the extensions to the above vCard format, examples with multiple views could include:

### External identity/View 1 (Personal)

BEGIN:VCARD
VERSION:3.0
FN:Joe Smith
VIEW EXTERNAL IDENTITY: Personal
VIEW SKIN URL:http://www.example.org/joesmith/skins/personal
TEL;HOME: +1-222-222-2222
TEL;CELL:+1-333-333-3333
URL: http://www.example.org/joesmith
EMAIL;INTERNET:joe.smith@example.org
END:VCARD

### External identity/View 2 (Professional)

BEGI N:VCARD
VERSION:3.0
FN:Joe Smith
VIEW EXTERNAL IDENTITY: Professional
VIEW SKIN U RL:http://www .example.org/joesmith/skins/professional
TEL;WORK: +1-111-111-1111
TEL;CELL:+1-333-333-3333
URL: hftp://www.example.org/joesmith
EMAIL;INTERNET:joe.smith@example.org
END:VCARD

As with the above, the vCard can be mapped to hCard:

### External identitylView 1 (Personal)

```
       <div id="hcard-Joe-Smith" class=vcard">
             <a class="url fn" href="hftp://www.example.org/joesmith">Joe Smith</a>
             <a class="email"
       href="mailto:joe.smith@example.org">joe.smith@example.org</a>
             <div class="tel">
                    <span class="type"> HOME</span> +1-222-222-2222
             </div>
             <div class="tel">
                    <span class="type"> CELL</span> +1-333-333-3333
             </div>
             <div class="view external identity">Personal</div>
             <a class="view skin URL" href="
       http:llwww,example,org/joesmith/skins/personal" >View Skin URL</a>
       </div>
```

### External identity/View 2 (Professional)

```
       <div id="hcard-Joe-Smith" class=vcard">
             <a class="url fn" href="http://www.example.org/joesmith">Joe Smith</a>
             <a class="email"
       href="mailto:joe.smith@example.org">joe.smith@example.org</a>
             <div class="tel">
                    <span class="type"> WORK</span> +1-111-111-1111
             </div>
             <div class="tel">
                    <span class="type"> CELL</span> +1-333-333-3333
             </div>
             <div class="view external identity">Professional</div>
             <a class="view skin URL" href="
       http://www.example.org/joesmith/skins/professional" >View Skin *URL</a>
       </div>
```

As will be appreciated by those skilled in the art, it is possible that the user may offer more than one of his or her external identities to a single contact. In this case, the presentation methods for the different external identities may include the ability to view the different external identities or different field of the various external identities by, for example, scrolling, tabs in the contact display, menu items, links, among others. The above is not meant to be limiting and various viewing options are available as would be appreciated by those skilled in the art.

Views may be customized with specific skins associated to each external identity for better visualization. The skins can include information such as background images, color of the text, fonts used for the address book, icons or other visual information.

Address subsets may be dynamic. Thus, an address subset could be based on a current status, such as a presence, location, among others of the viewer and of the person whose contact information is shown. The address subset may also be pseudo-static and thus, dependent on certain rules defined by the content information owner (e.g.: includes phone and cell phone during the day, but only cell phone in the evening). These rules are applied to build an external identity when someone requests contact information for the first time or for subsequent updates. Rules may also include validation on whether the requesting contact belongs to certain groups, clubs, geographical locations, among others.

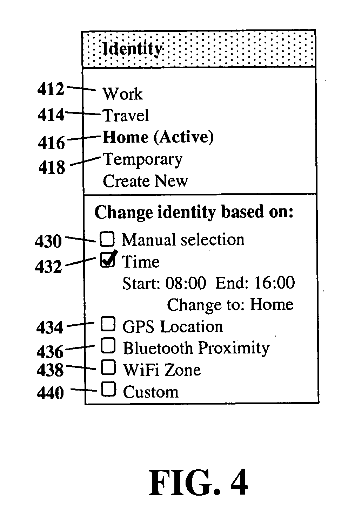

References are now made to **Figure 4**.

Some external identity selections settings can be associated to each external identity of a contact in an address book. For example, a "work address subset" can be shown as active or default from 9 a.m. to 6 p.m. A driving address subset could be shown between 8 a.m. and 9 p.m. and 6 p.m. and 7 p.m. A no phone calls address subset can be shown at night. A home address subset could be shown at other times. **Figure 4** illustrates a menu for setting and creating such defaults.

In the example of **Figure 4**, four address subsets are provided. The example **Figure 4** includes a work subset **412**, a travel subset **414**, a home subset **416**, and a temporary subset **418**.

The example of Figure 4 further includes settings to change between the address subsets. Thus, in the example of **Figure 4**, the address subset could be selected based on manual selection **430**. The address subset could also be changed based on time field **432**.

The address subset could also be changed based on a location field which could be use by any location type methods such as GPS, AGPS, cell ID, SSID, WLAN, etc. **434**.

The address subset could also be changed based on a Bluetooth proximity field **436**.

The address subset could also be changed based on an alternative radio access field (e.g.: WIFI zone) **438**.

The address subset could also be changed based on a custom field **440**.

In particular, time field **432** could indicate that between certain times, a certain address subset should be active, and could also indicate which external identity to switch to after the time expires. In the example of **Figure 4**, time field **432** includes a start time and an end time and indicates that it should change to a home address subset when the end of time has expired.

The location field (e.g. GPS) **434** could, for example, be used to indicate that if the user within a certain geographic area, a work address subset could be activated. Alternatively, if the user is in a different location corresponding to the user's home, the home field could be activated. Alternatively, if the user is in a user that does not match work or home, a travel external identity could be utilized.

Bluetooth proximity field **436** could indicate that if the device is capable of communicating via Bluetooth, then a certain address subset should be switched to.

Similarly, if an alternative radio access field **438** which could be used for WiFi zone, Bluetooth, WiMax, LTE, etc, could indicate that if the device is capable of communicating over the alternative radio access methods, a certain address subset should be switched to.

A custom field **440** could be utilized to create rules, for example, if various fields present conflicting information about which address subset to switch to. This could be used to indicate which fields take precedence, among others. The custom field could also utilize other criteria than those indicated above.

Utilizing the example of **Figure 4**, a receiving party wants contact information for a user. If the receiving party is designated as a work colleague, the user may have set the address book to only provide a work address subset to work colleagues. During the hours of 9 am to 6 pm, from the settings in **Figure 4** a complete address subset for work could be presented to the receiving party.

After 6 pm, a home address subset could be specified by the user. In this case, if the receiving party does not have rights to receive the home address subset, the work address subset may still be provided to the receiving party, but with less fields. For example, if the work address subset includes a work telephone number during business hours, this may be removed after business hours since the user cannot be reached at that number.

As what will be appreciated, when sharing a user's information, the settings would apply and the user information is displayed according to his or her contacts.

In a further embodiment, the user could provide communication preferences for each of the different address subsets. The preferred communications method could appear first or appear highlighted and alternative communications information could be available only when expanding the contact details in an address book.

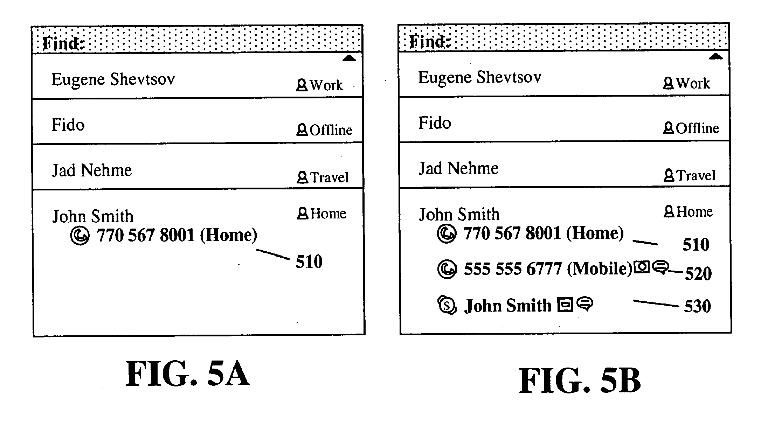

Reference is now made to **Figure 5A**. In **Figure 5A**, when a user scrolls over a name the preferred communications method is displayed. In the case of **Figure 5A**, the home phone number **510** is the preferred communications method for this particular receiving party, and thus, the home phone number **510** is displayed. If the viewer then clicks on the contact, other information such as the cell phone number and a Phone over IP, e.g.: Skype^{™}, identifier appear. This is illustrated in **Figure 5B**, where mobile number 5**2**0 and Skype ^{™} information **530** are displayed. The home phone number **510** remains for both the embodiments of **Figure 5A** and **Figure 5B**.

In a further embodiment, if the address book allows multiple variants for the same communication method, the information displayed for the contact external identity should be shown with the preferred variant for each communications method as the obvious choice. Thus, for example, if a contact has multiple emails addresses and it if is possible to send an email from the address book, the address book should show by default the preferred email address for the address subset of the contact offered to the address book owner. If this address subset contains other email address for the contact, these could be shown upon additional action such as expanding a drop down list, scrolling, menu selection, among others.

Further, if a communication application on the device allows communicating by selecting a contact from the address book, the user should only view the address subset, contact, and the default valid email address, instant messaging identifier, among others, according to the current contact external identity, which will by default be used by the communications application. For example, a receiving party wants to email John Smith. John Smith has multiple emails addresses, but one that is set for the default address for the current contact external identity. Thus, if the receiving party is utilizing an email application and selects John Smith, the email application should utilize the default email address when creating the email to be sent.

As will be appreciated by those skilled in the art, the above works both for both non-connected and non-shared address books, as well as the connected and network based address books described above.

As will be appreciated, if an address book is a network based address book, various other information may be available to the address book that can be integrated into the address book.

In a first embodiment, presence information could be available and integrated with the address book. This could significantly increase the value of contact information in the address book. Instant messaging status and presence information could appear in the contact field when relevant. Further, the available communications method could be reflected in the different address subsets.

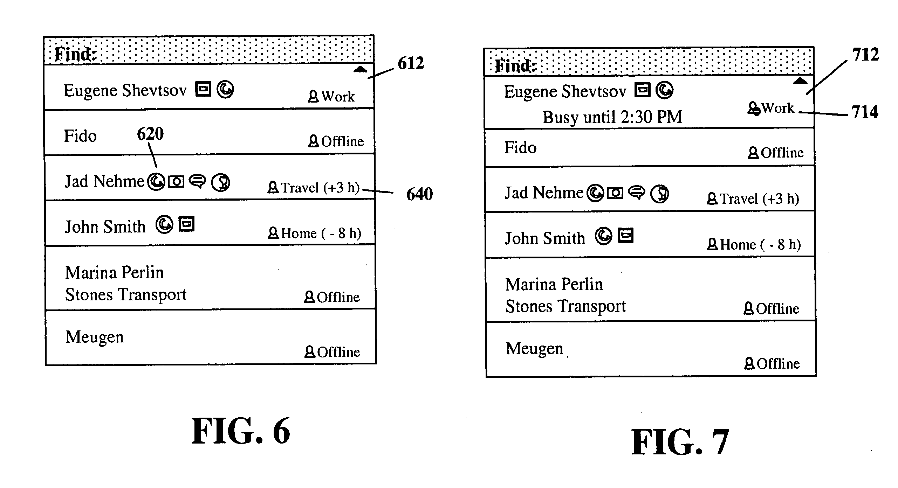

Reference is now made to **Figure 6**.

**Figure 6** shows an address book in which contact information has presence information included therein. For example, in **Figure 6**, the present "external identity" status is shown in field **612**. Also, icons **620** are provided that could reflect the presence information for a user.

In other embodiments, a presence time stamp **640** could be provided to indicate easily to a user that the contact is in a time zone which is ahead or behind of the user's current time zone by a certain amount of time.

As will be appreciated by those skilled in the art, presence information usually requires frequent updates by communications between the device and the present platform. One way to save device resources and bandwidth would be to integrate into the address book the presence information of a contact, that is also a contact in an instant messaging application, the presence status of the contact in the instant messaging application.

In a further embodiment, the user's own presence status could be updated by signaling, as part of a message, the user's state. One example of signaling could be how long since the user's last interaction with the device. This status identifier could be posted to the presence server (e.g. via the host server (email, MMS, SMS servers) or an intermediate server (or gateway), which can pass the information to the presence server). In this case, a converged address book utilized presence information and the converged address book server in the network retrieves this information from the presence platform and the address book of each user can be updated with the presence states of the contacts.

An example of this is found in PCT publication WO 2005/017770. This document describes a system and method for integration between an address book and instant messaging application on a mobile device. This is for offering a consolidated view of a contact's address information and instant messaging handle (contact) and through an aggregated UI a user be made aware of a contacts individual or group IM presence status as well as initiating IM related operations such as initiating an individual or group IM conversation based on access to the address book and Instant messaging databases. Furthermore the document includes use of APIs for IM and Address book to allow for the aggregated data view to be presented both by the Address Book and IM UI. Additionally the API's can be used to add new entries, edit existing ones and also reflect IM contact presence information. The API for the aggregated data view provides an indirection repository based on VM object based storage for storing API entry points. The Address Book application incorporates a schema where metadata can identify the address book and instant messaging related fields for the Address Book UI. In the Address Book UI a buddy list can be displayed and IM actions such as starting an individual or group conversation can be performed. Within the UI as previously mentioned both individual and group presence availability is reflected. Furthermore contact name and IM handles are displayed side by side in the UI for improved association.

Additionally, in order to limit the communication between client and servers for presence status, if presence information is sent to the device and integrated into the address book to update contact information, the display of presence information in the user interface can be modified, over time or turned to inactive if the period between the two subsequent updates of presence information is over a predefined time threshold.

PCT publication WO 2005/060221, relates to a set of rules to a contact profile (address book entry) on a mobile device where the rules indicate what method of communication (phone, email, text) the contact prefers to receive. When the mobile user sends a message to the contact the preferred method of communication is used based on the rules applied to the contact's profile.

PCT publication WO 2005/027383, relates to presence information, which is typically in the form of "available", "away" and "disconnected". In addition, the user can typically set their own state, to either one of the predefined ones, or a custom one like "at the gym", but most users rarely configure a custom state. On a mobile device with telephone and organizer functionality, it is possible to automatically set and unset a few additional states, including "on the phone" when a phone call starts and ends, or "in a meeting", if the Calendar has an appointment for the current time period. It's also possible to set additional states based on some applications or services being active or not, or based on inactivity timeouts. This reference shows how this rich presence information could be presented to the user, with icons and strings.

US patent application number 11/567,260, relates to a method and apparatus to maintain accurate presence information for a given mobile device without introducing substantial new traffic to the wireless network by deriving mobile device presence information by analyzing or monitoring the traffic going to and from the mobile device.

The address book could be also associated with a calendar for the user. If this is the case, the availability status can be updated based on calendar information. For example, if in the work external identity, when the user is in a meeting, the user can be shown as 'busy'. If the receiving party is within the same corporate domain, additional information could also be displayed to the receiving party when viewing the contact information. Thus, for example, the contact can be shown as busy and in a meeting with John Smith until 11:30 a.m. Similarly, if the user is shown as out of the office, the address book user interface can reflect this and the preferred method of communication can be altered. For example, if the user is out of the office, the preferred method of communication can be shown as cell phone first and office phone number last.

Reference is now made **Figure 7**. **Figure 7** shows an address book that utilizes calendar information to update the address book. For example, a receiving party looking at contact **712** sees that the contact **712** is in a meeting until 2:30 p.m. and an icon **714** indicates that communication is not possible with the user.

In a further embodiment, the address book can also be integrated with a corporate private branch exchange (PBX). In this case, the preferred contact method can reflect that the user is on a call and the message will be derived to a voice mail.

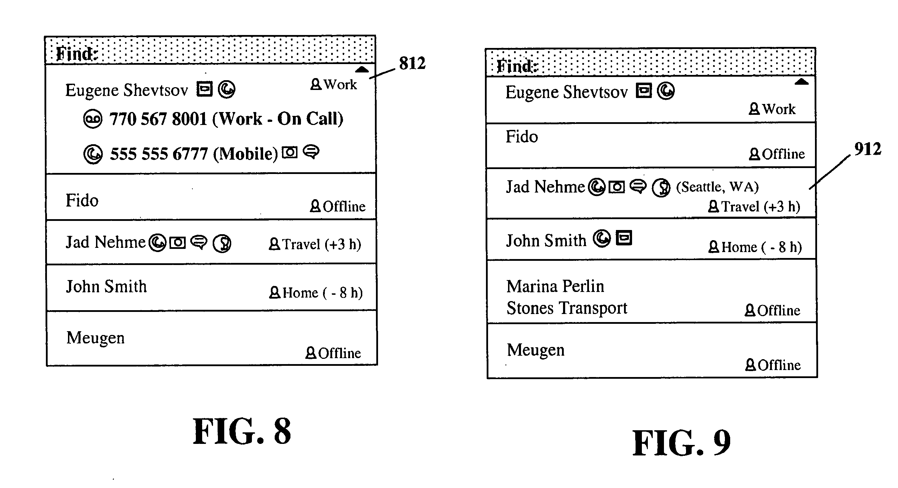

Reference is now made to **Figure 8. Figure 8** shows an address book in which the address book integrated with a corporate PBX. In this case, the corporate PBX provides information that a contact **812** is currently on a call, which might provide a receiving party the ability to go directly to voice mail or to not attempt the call until contact **812** is off the phone.

As will be appreciated by those skilled in the art, when an address book is regularly synchronized or connected with a centralized address book, the detection of relevant user external identities can be updated on a more accurate basis.

For example, if user is roaming or traveling in a different time zone, the user's device could retrieve the local time and notify the central address book to switch the contact information for the user to a "travel address subset" for other users. This could be done manually or automatically on user settings. Further, the time zone offset could be made available as part of the traveling addresses subset for other users. Additionally the availability status of the user is switch to the relevant state.

As will be appreciated, if the address books are connected through a presence system, the above could also be achieved.

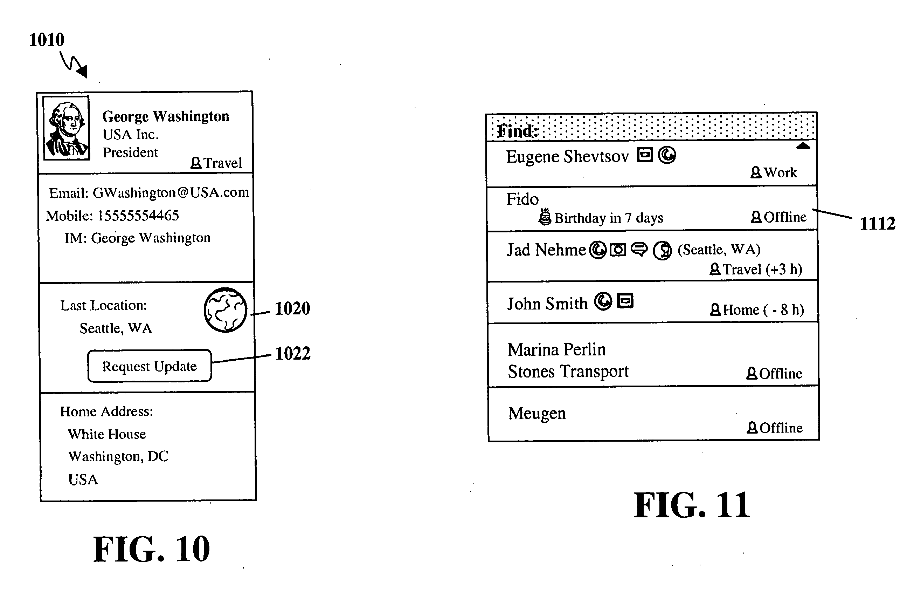

Further, if the device is location enabled for example GPS enabled or GPS assisted, the traveling address subset could be updated with the latest location of the user. As will be appreciated by those skilled in the art, when referring to GPS in the present disclosure, other location methods are equally applicable, including waypoints, CGI, service set identifier (SSID), among others. The user's GPS location could then be used to offer location-based services such as directions to or from another contact in the address book, local weather information for the contact, nearby points of interest, information, meeting or conference rooms in the vicinity, among others. This could, as will be appreciated, be displayed in the address book. Referring to **Figure 9**, a contact 912 includes GPS enabled device information, such as where the user currently is. Referring to **Figure 10**, if a viewer has clicked on the contact **912** from **Figure 9**, the information for the user **1010** is presented and a last location area **1020** is provided indicating the last location of the user. Further, a request button update **1022** could be provided to the user to update the location of the user whose information is displayed. Alternatively, a periodic update could be performed by the device.

Further, other means to switch from one external identity to another would be apparent to those skilled with the art having regard to the above. Specifically, if a user switches the external identity manually, upon GPS location, upon time, upon Bluetooth or WIFI zone detection for known areas such as work or home, this could be reflected in the address book.

In a further embodiment, the address book could be connected to a social network system or application. Examples include Facebook ^{™} or Plaxo ^{™}. In this regard, additional information such as personal events could be reflected for the address subset. For example, the address book could display the birthday or anniversary date for a personal external identity, personal URLs.

Reference is now made to **Figure 11**.

**Figure 11** shows an address book in which a social network system has been integrated. In **Figure 11**, contact **1112** is a personal contact, rather than a professional contact and in this case, contact **1112** includes information that their birthday is in 7 days.

As will be appreciated, the social networks could be used for other information, such as utilizing an avatar instead of a user's picture or utilizing an updated picture for the social network. Such information may not be initially part of the shared contact information and can be added or restored as part of the contact details. Additional information could also follow a different storage or sharing policy according to the user, contact or service provider or based on preference settings.

In a further embodiment, notification of changes from contact could be reflected in the address book utilizing various visual aspects such as different colors, different fonts, and different backgrounds, among others. Thus, if a user changes his or her telephone number, viewers of this contact could see the telephone in red until they selected the contact or interacted with that contact. The viewer may have the choice of accepting or refusing all or part of the changes. A user, in some embodiments, could automatically accept all or part of the changes for all contacts or all or part of the changes for certain category of contacts.

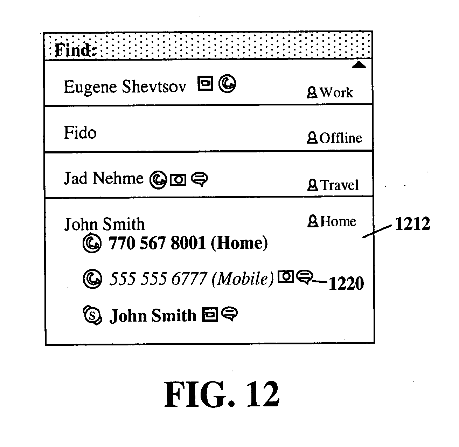

Referring to **Figure 12**, **Figure 12** shows a contact **1212** in which a mobile phone number has changed. The contact **1212** shows mobile number **1220** as different font until it has been selected.

In a further embodiment, a free field could allow a user to advertise specific information by entering the information manually in the free field, entering a URL to an RSS field or other similar means that could allow a user's contacts to see an icon, information, advertisements, recommendation that would have been selected directly or indirectly by the user. The free field can be directed or used by a particular application, such as an advertisement solution, a specific category of social networking tool, a mood or smiley from an instant messaging application, among others.

**Figures 4** to **12** therefore provide examples of where dynamic information can be used to make changes to an address subset.

In a further embodiment, if a receiving party is set to a particular external identity, his or her address book can be set to present him or her with a subset with his or her contacts that will be relevant to that particular external identity. For example, if the receiving party is in the "travel address subset" but is on holiday, the receiving party may choose to see only personal contacts in his or her address book and/or a subset of the professional contacts such as close team members. Additionally, the receiving party will be shown with his or her travel address subset, but be displayed as not available or with minimal information to non-personal contacts.

The above therefore provides for formatting and use of address subsets based on a receiving party's information.

The network or converged address book is defined as a centralized address book that contains users and contacts information on behalf of converged address book users (subscribers). The converged address book provides the methods to create the different external identities for the users.

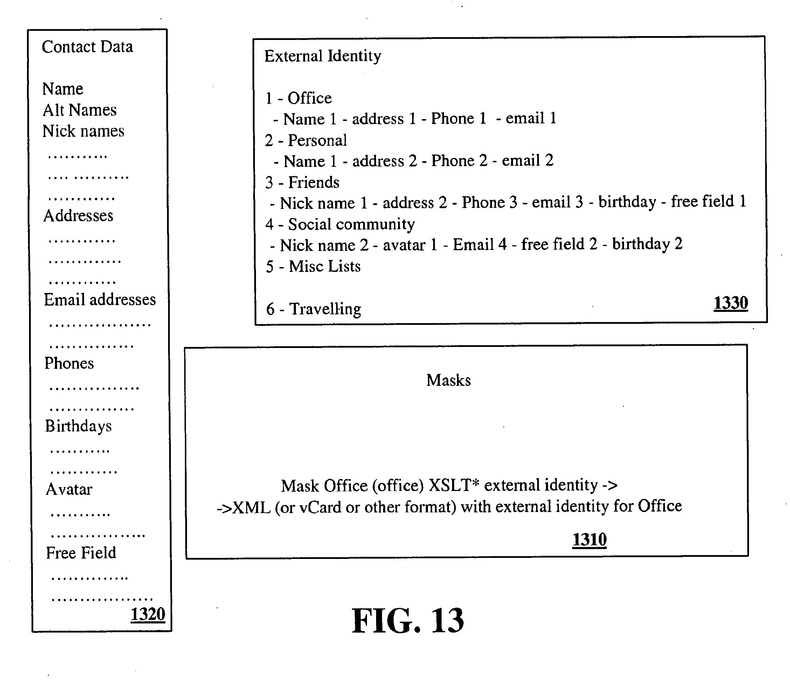

One particular method of a network/converged address book to define and create external identities on behalf of a user is shown with regard to **Figure 13****.** In **Figure 13** a mask **1310** could be applied to information related to a contact. A user would be given the capability to define, upload, and modify all his or her information **1320** and different external identities **1330**. When sending his or her information to another user, or when another user retrieves the first user's information from the converged address book, a mask is applied to create the external identity that has to be exposed to the other user. The mask **1310** contains all necessary rules and information to create or publish the different external identities. The mask can reside within the device or in the network where the address book is stored. In the case of a local address book, the different identities and the mask can be created on the device before sending the contact information. For instance, this could be a new vCard format. In **Figure 13**, contact information is stored in contact data **1320** and various external identities are defined by the users and shown as **1330**.

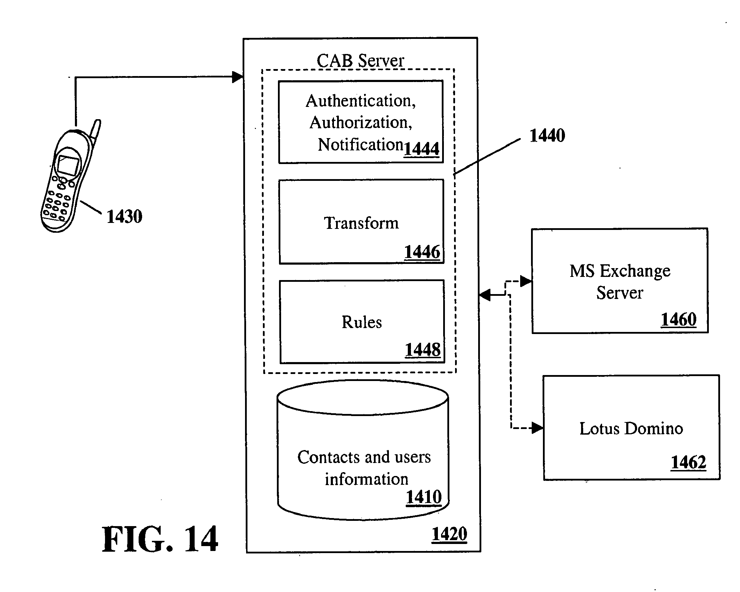

Reference is now made to **Figure 14**.

In the case of a network address book, users can upload a full set of their contact information. The network address book will create a different mask in views of the user when his or her contact is required by others. Particularly, when another user is authenticated as a "professional contact" the mask "office" could be applied to the contact information before it is delivered.

In the case of **Figure 14**, a converged or network address book stores contacts and users information for CAB users in a common database **1410** which is either located on a network/converged address book (CAB) server **1420** or accessed remotely by the server. A mobile device **1430** can either access contact information in CAB directly using one of the data access protocols or to have its local address book synchronized with the CAB server **1420** and with the CAB database **1410** utilizing XML vCard format or one of the data synchronization mechanisms; or other means that would be apparent to those skilled in the art. Mobile devices **1430** are well known in the art, and can include any wireless device, mobile data device, personal digital assistant, digital pager, laptop, or other data device.

When a mobile device **1430** contacts CAB server **1420**, a processing module **1440** includes an authentication, authorization and notification module **1444**, a transformation module **1446** and a rules module **1448**. Authentication, authorization and notification module **1444** is utilized to authenticate the mobile device **1430** utilizing any technique known to those skilled in the art, authorize for access to contact data, and notify about the changes in the known external identities. Further, when the mobile device 1430 wants to retrieve contact information for a contact, the data is then transformed by module **1446** with respect to the rules applied by module **1448** to data that is stored in CAB database **1410**. The transformations and rules may be applied prior to the data request from the mobile device **1430** and the requested external identities may already be stored and ready for retrieval in the CAB database **1410**.

CAB information or information from a local address book can be stored on mobile device **1430** within an internal or external memory. Examples of such memory are known to those skilled in the art, and for external memory can include a (universal) subscriber identity module ((U)SIM), removable user identity module (RUIM), Compact Flash, MicroSD, memory sticks, among others. A mobile device can then write to the external or internal memory and read from it.

The exemplary steps of the above CAB server **1420** may include:
1 - A user synchronizes his or her address book with a CAB server or makes a request to create the contact;
2 - The CAB server, after all authorization and security steps have occurred, will search for the relevant data to see if the user is allowed to see the particular content;
3 - The CAB server then applies rules according to preferences or policies of the requested contact on the contact information;
4 - The CAB server applies a transformation defined in the mask, for example, an XSLT transformation to create an external identity by extracting, filtering, and updating the relevant information from the contact data; and
5 - The CAB server transfers the subset of contact data to the requesting user.

As will be appreciated by those skilled in the art, the exemplary steps of CAB server 1420 identified above are not limiting, and other implementations would be evident to those skilled in the art.

In addition to the above, additional steps could adapt the data to the user devices capabilities. For instance the XSLT transformation could provide a vCard, extended vCard, hCard, or HTML document to deliver the contact external identities to a particular device.

Additionally, to simplify the mask creation, a hierarchical graph structure (e.g. nested XML document) could be used, where a node works as a category definition. Any fields can be freely linked to any external identity or to any category. Some categories may be present in a CAB but not link to any external identity. (e.g.: for a period of time, based on user selection etc) The address book display of fields is based on a selected external identity but not on standalone categories. For example, a work category means displaying work information first, along with a preferred communications channel. Other information could be available or not depending on permissions, and utilize different levels of access (e.g. see all in a menu, or scroll further down etc).

Additionally the rules and policy of a given mask could facilitate the update of an external identity based on dynamic modification of information that is part of a group, category or external identity. For instance the User Interface could display a small difference of the social community icon if information from the social community node has been updated. For resource reasons, such updating in the UI could be provided based only on a user subscription or on specific devices condition (WiFi, LAN connections, plugged devices etc).

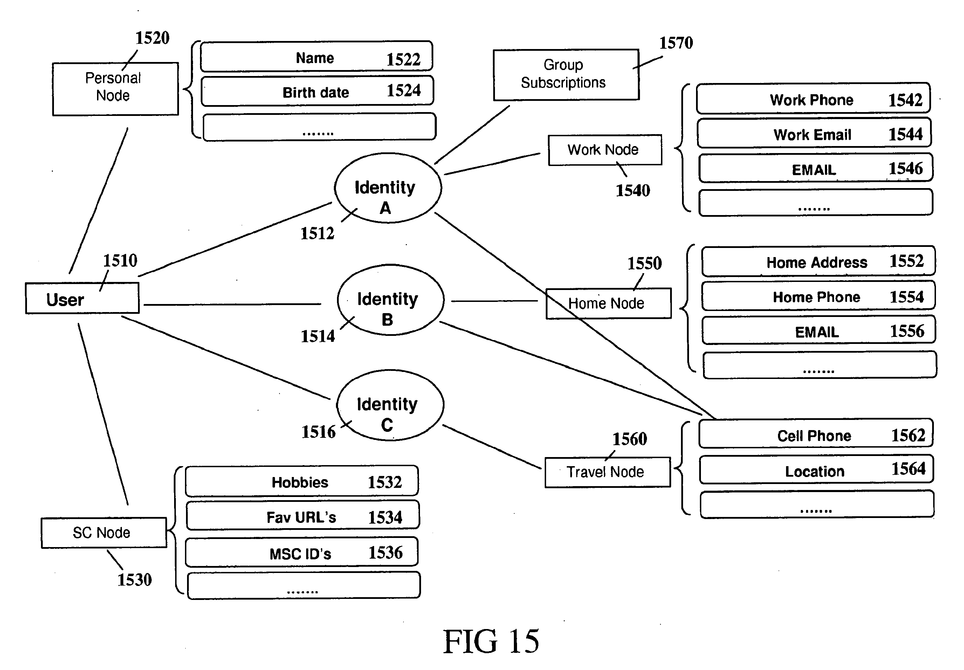

Reference is now made to **Figure 15**. **Figure 15** shows a user **1510** that has 3 external identities defined. Specifically, these are shown as identity A **1512**, identity B **1514**, and identity C **1516**.

A user has a link to a personal node **1520**, which defines personal information such as name **1522**, birthdate **1524**, among others.

A user further has a link to a Social Community (SC) node **1530**. SC node 1530 includes information such as hobbies 1532, favorite URLs **1534**, SC IDs **1536**, among others.

Identity A **1512** is associated with a work node **1540**, which includes various information such as a work phone **1542**, a work email **1544**, and an alternate email **1546**, among others.

Identity B **1514** is associated with a home node **1550**. Home node **1550** includes a home address 1552, a home phone **1554**, and an email address **1556**, among others.

Identity C **1516** is associated with a travel node **1560**. Travel node **1560** includes information such cell phone number **1562**, a location **1564**, among others.

Identity A **1512** and identity B **1514** also have a link to a cell phone number 1562, thereby providing the ability to display this number associated with this external identity.

Identity A **1512** also includes information about group subscriptions **1570**. The above therefore provides for the linking of fields to any external identity or any category based on a hierarchical graphical structure.

Further, CAB rules and transformation components could be abstraction layer above, for example, a Lotus notes or a Microsoft exchange server where could be stored contacts and users information. This is shown by Microsoft exchange server **1460** and Lotus notes server **1462** in **Figure 14****.**

Additionally, the CAB mask can be based on PEEM policies and methods. The OMA PEEM policies would apply as a set of rules in module **1448** of **Fig 14**. OMA PEEM PEL specification defines the language in which policies can be expressed. The PEL specification includes the definition of language constructs, and may define multiple language options, for the convenience of resolving particular issues. In order to use PEEL for the common adress book the conditions for the address book needs to be define as descrive above. The PEEL policy could then apply to the address book specific conditions. Additionaly an extension of the common PEEL policy may be needed.

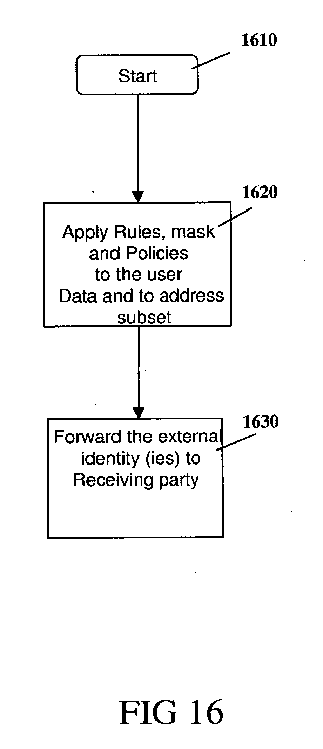

Reference is now made to **Figure 16**. **Figure 16** **i**llustrates a flow diagram for a method in accordance with the above.

The process starts at step **1610** and proceeds to step **1620**, in which a set of address book field and value information (one or more external identities) are created by applying rules, mask and PEL policies.

The process then proceeds to step **1630** in which the one or more external identities are forwarded to a receiving party.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for managing multiple external identities of a user with an address book application comprising the steps of:
creating one or more external identities (1330) for the user, each external identity including at least one address book field and corresponding value;
forwarding (1630) the one or more external identities (1330) to a receiving party; and
presenting a selected external identity (1330) from the one or more external identities (1330) to the receiving party by dynamically updating at least one of the address book field and the corresponding value based on at least one of time of day and a state of the user for facilitating communication between the user and the receiving party.

2. The method of claim 1, wherein the one or more external identities (1330) correspond to a classification of recipients by the user.

3. The method of claim 1 wherein the one or more external identities (1330) are created based on a state of a requesting party.

4. The method of any one of claims 1 to 3, wherein the state of the user is determined based on a presence state of the user, a location of the user, and/or a network the user is connected to.

5. The method of any one of claims 1 to 4, further comprising, prior to the creating step, specifying settings for creating the one or more external identities.

6. The method of claim 5, wherein the specifying step is dependent on: a time of day; a location; a network connected to; and/or availability of short range wireless networks.

7. The method of any one of claims 1 to 6, wherein the forwarding step utilizes an enhanced versitcard.

8. The method of claim 7, wherein the enhanced versitcard is augmented with an extension for an external identity view type and/or an extension for a view skin uniform resource locator.

9. The method of claim 8, wherein the versitcard is a hypertext markup language versitcard.

10. The method of any one of claims 1 to 9, wherein the creating step utilizes information integrated with the address book.

11. The method of claim 10, wherein the information comprises a social network the user belongs to and/or the user's calendar.

12. The method of any one of claims 1 to 11, wherein the creating step inserts a time zone for the address owner into the one or more external identities.

13. The method of any one of claims 1 to 12, wherein the address book application is located on a mobile device (1430) and further comprising the step of synchronizing a network based address book application with the address book application.

14. The method of any one of claims 1 to 12, wherein the address book application is network based and further comprising the step of synchronizing an address book application located on a mobile device (1430) with the address book application.

15. The method of any one of claims 1 to 14, wherein the one or more external identities (1330) are stored in an internal or external memory of a mobile device (1430).

16. A mobile device (1430) adapted to execute an address book application for managing multiple external identities (1330) of a user, the mobile device (1430) comprising:
a processing module adapted to create one or more external identities (1330) for the user, each external identity including
at least one address book field and corresponding value;
a communications module adapted to forward the one or more external identities to a receiving party and adapted to receive external identities (1330) from a third party; and
a presentation module adapted to present a selected identity from said received external identities (1330) by dynamically updating at least one of the address book field and the corresponding value based on at least one of time of day and
a state of the third party for facilitating communication between the user and the receiving party.

17. The mobile device (1430) of claim 16, wherein the presentation module is further adapted to present the one or more external identities (1330) to the third party.

18. The mobile device (1430) of claim 16 or claim 17, wherein the one or more external identities (1330) correspond to a classification of recipients by the user.

19. The mobile device (1430) of one of claims 16 to 18, wherein the one or more external identities (1330) are created based on a state of a requesting party.

20. The mobile device (1430) of any one of claims 16 to 19, wherein the electronic address book is adapted to determine a state of the user based on a presence state of the user, a location of the user, and/or a network the user is connected to.

21. The mobile device (1430) of claim 20, wherein the communications module is further adapted to forward the state of the user to the receiving party.

22. The mobile device (1430) of one of claims 16 to 21, wherein the communications module is further adapted to receive a state of the third party.

23. The mobile device (1430) of any one of claims 16 to 22, wherein the processing module comprises an authentication module (144), a transformation module (1446), and a rules module (1448).

24. The mobile device (1430) of claim 23, wherein the transformation module (1446) is adapted to apply a mask to the at least one address book field and corresponding value.

25. The mobile device (1430) of claim 23 or claim 24, wherein the rules module (1448) is adapted to apply a context to the at least one address book field and corresponding value.

26. A computer readable medium storing computer readable instructions executable by a processor of a computing device to cause said device to implement the steps of the method of any one of claims 1 to 15.

## Patentansprüche

1. Verfahren zur Verwaltung mehrerer externer Identitäten eines Benutzers mit einer Adressbuchanwendung, mit den folgenden Schritten:
Erzeugen von einer oder mehreren externen Identitäten (1330) für den Benutzer, wobei jede externe Identität zumindest ein Adressbuchfeld und
einen entsprechenden Wert beinhaltet;
Weiterleiten (1630) der einen oder der mehreren externen Identitäten (1330)
an einen empfangenden Beteiligten; und
Präsentieren einer ausgewählten externen Identität (1330) aus der einen oder den mehreren externen Identitäten (1330) dem empfangenden Beteiligten durch dynamisches Aktualisieren zumindest eines von dem Adressbuchfeld und dem entsprechenden Wert auf der Grundlage von zumindest einem von Tageszeit und Zustand des Benutzers zum Erleichtern der Kommunikation zwischen dem Benutzer und dem empfangenden Beteiligten.

2. Verfahren nach Anspruch 1, wobei die eine oder die mehreren externen Identitäten (1330) einer Klassifizierung von Empfängern durch den Benutzer entsprechen.

3. Verfahren nach Anspruch 1, wobei die eine oder die mehreren externen Identitäten (1330) auf der Grundlage eines Zustands eines anfragenden Beteiligten erzeugt werden.

4. Verfahren nach irgendeinem der Ansprüche 1 bis 3, wobei der Zustand des Benutzers auf der Grundlage eines Anwesenheitszustands des Benutzers, eines Standorts des Benutzers und/oder eines Netzes, mit dem der Benutzer verbunden ist, bestimmt wird.

5. Verfahren nach irgendeinem der Ansprüche 1 bis 4, weiterhin mit dem Spezifizieren von Einstellungen zum Erzeugen der einen oder mehreren externen Identitäten vor dem Erzeugungsschritt.

6. Verfahren nach Anspruch 5, wobei der Spezifizierungsschritt abhängt von:
einer Tageszeit; einem Standort; einem Netz, mit dem man verbunden ist; und/oder der Verfügbarkeit von Nahbereichs-Drahtlosnetzen.

7. Verfahren nach irgendeinem der Ansprüche 1 bis 6, wobei der Weiterleitungsschritt eine verbesserte Versitcard benutzt.

8. Verfahren nach Anspruch 7, wobei die verbesserte Versitcard mit einer Erweiterung für einen externen Identitäts-Ansichtstyp und/oder einer Erweiterung für einen Ansichts-Skin-Einheitlicher-Quellenweiser erweitert worden ist.

9. Verfahren nach Anspruch 8, wobei die Versitcard eine Hypertext-Auszeichnungssprache-Versitcard ist.

10. Verfahren nach irgendeinem der Ansprüche 1 bis 9, wobei der Erzeugungsschritt Information verwendet, die in das Adressbuch eingebunden ist.

11. Verfahren nach Anspruch 10, wobei die Information ein soziales Netz, dem der Benutzer angehört, und/oder den Kalender des Benutzers umfasst.

12. Verfahren nach irgendeinem der Ansprüche 1 bis 11, wobei der Erzeugungsschritt eine Zeitzone für den Adressbesitzer in die eine oder die mehreren externen Identitäten einfügt.

13. Verfahren nach irgendeinem der Ansprüche 1 bis 12, wobei sich die Adressbuchanwendung auf einer mobilen Vorrichtung (1430) befindet, und weiterhin mit dem Schritt des Synchronisierens einer auf einem Netz basierenden Adressbuchanwendung mit der Adressbuchanwendung.

14. Verfahren nach irgendeinem der Ansprüche 1 bis 12, wobei die Adressbuchanwendung netzbasiert ist, und weiterhin mit dem Schritt des Synchronisierens einer auf einer mobilen Vorrichtung (1430) befindlichen Adressbuchanwendung mit der Adressbuchanwendung.

15. Verfahren nach irgendeinem der Ansprüche 1 bis 14, wobei die eine oder die mehreren externen Identitäten (1330) in einem internen oder externen Speicher einer mobilen Vorrichtung (1430) gespeichert sind.

16. Mobile Vorrichtung (1430), die dazu ausgelegt ist, eine Adressbuchanwendung zum Verwalten mehrerer externer Identitäten (1330) eines Benutzers auszuführen, wobei die mobile Vorrichtung (1430) umfasst:
ein Verarbeitungsmodul, das dazu ausgelegt ist, eine oder mehrere externe Identitäten (1330) für den Benutzer zu erzeugen, wobei jede externe Identität einschließt:
zumindest ein Adressbuchfeld und einen entsprechenden Wert;
ein Kommunikationsmodul, das dazu ausgelegt ist, die eine oder die mehreren externen Identitäten an einen empfangenden Beteiligten weiterzuleiten, und dazu ausgelegt ist, externe Identitäten (1330) von einem dritten Beteiligten zu empfangen; und
ein Präsentationsmodul, das dazu ausgelegt ist, eine ausgewählte Identität aus den empfangenen externen Identitäten (1330) durch dynamisches Aktualisieren von zumindest einem von dem Adressbuchfeld und dem entsprechenden Wert auf der Grundlage von zumindest einem von Tageszeit und Zustand des dritten Beteiligten zum Erleichtern der Kommunikation zwischen dem Benutzer und dem empfangenden Beteiligten zu präsentieren.

17. Mobile Vorrichtung (1430) nach Anspruch 16, wobei das Präsentationsmodul weiterhin dazu ausgelegt ist, dem dritten Beteiligten die eine oder die mehreren externen Identitäten (1330) zu präsentieren.

18. Mobile Vorrichtung (1430) nach Anspruch 16 oder Anspruch 17, wobei die eine oder die mehreren externen Identitäten (1330) einer Klassifizierung von Empfängern durch den Benutzer entsprechen.

19. Mobile Vorrichtung (1430) nach einem der Ansprüche 16 bis 18, wobei die eine oder die mehreren externen Identitäten (1330) auf der Grundlage eines Zustands eines anfragenden Beteiligten erzeugt werden.

20. Mobile Vorrichtung (1430) nach irgendeinem der Ansprüche 16 bis 19, wobei das elektronische Adressbuch dazu ausgelegt ist, einen Zustand des Benutzers auf der Grundlage eines Anwesenheitszustands des Benutzers, eines Standorts des Benutzers und/oder eines Netzes, mit dem der Besucher verbunden ist, zu bestimmen.

21. Mobile Vorrichtung (1430) nach Anspruch 20, wobei das Kommunikationsmodul weiterhin dazu ausgelegt ist, den Zustand des Benutzers an den empfangenden Beteiligten weiterzuleiten.

22. Mobile Vorrichtung (1430) nach einem der Ansprüche 16 bis 21, wobei das Kommunikationsmodul weiterhin dazu ausgelegt ist, einen Zustand des dritten Beteiligten zu empfangen.

23. Mobile Vorrichtung (1430) nach irgendeinem der Ansprüche 16 bis 22, wobei das Verarbeitungsmodul ein Authentisierungsmodul (144), ein Transformationsmodul (1446) und ein Regelmodul (1448) umfasst.

24. Mobile Vorrichtung (1430) nach Anspruch 23, wobei das Transformationsmodul (1446) dazu ausgelegt ist, eine Maske an das zumindest eine Adressbuchfeld und den entsprechenden Wert anzulegen.

25. Mobile Vorrichtung (1430) nach Anspruch 23 oder Anspruch 24, wobei das Regelmodul (1448) dazu ausgelegt ist, einen Kontext an das zumindest eine Adressbuchfeld und den entsprechenden Wert anzulegen.

26. Computerlesbares Medium, das computerlesbare Anweisungen speichert, die von einem Prozessor einer Rechenvorrichtung ausgeführt werden können, um die Vorrichtung zu veranlassen, die Schritte des Verfahrens nach irgendeinem der Ansprüche 1 bis 15 umzusetzen.

## Revendications

1. Procédé permettant de gérer plusieurs identités externes d'un utilisateur avec une application de carnet d'adresses comprenant les étapes qui consistent :
à créer une ou plusieurs identités externes (1330) pour l'utilisateur, chaque identité externe comportant au moins un champ de carnet d'adresses et une valeur correspondante ;
à transmettre (1630) la ou les plusieurs identités externes (1330) à une partie de réception ; et
à présenter une identité externe (1330) sélectionnée à partir de la ou des plusieurs identités externes (1330) à la partie de réception par la mise à jour de manière dynamique d'au moins l'un(e) du champ de carnet d'adresses et de la valeur correspondante sur la base d'au moins l'un(e) de l'heure locale et d'un état de l'utilisateur pour faciliter la communication entre l'utilisateur et la partie de réception.

2. Procédé de la revendication 1, dans lequel la ou les plusieurs identités externes (1330) correspond/correspondent à une classification de destinataires par l'utilisateur.

3. Procédé de la revendication 1 dans lequel la ou les plusieurs identités externes (1330) est/sont créée(s) sur la base d'un état d'une partie de demande.

4. Procédé de l'une quelconque des revendications 1 à 3, dans lequel l'état de l'utilisateur est déterminé sur la base d'un état de présence de l'utilisateur, d'un emplacement de l'utilisateur, et/ou d'un réseau auquel l'utilisateur est connecté.

5. Procédé de l'une quelconque des revendications 1 à 4, comprenant en outre, avant l'étape de création, le fait de spécifier des paramètres pour créer la ou les plusieurs identités externes.

6. Procédé de la revendication 5, dans lequel l'étape de spécification dépend : d'une heure locale ; d'un emplacement ; d'un réseau auquel on se connecte ; et/ou d'une disponibilité de réseaux sans fil à courte portée.

7. Procédé de l'une quelconque des revendications 1 à 6, dans lequel l'étape de transmission utilise un versitcard amélioré.

8. Procédé de la revendication 7, dans lequel le versitcard amélioré est augmenté avec une extension pour un type de vue d'identité externe et/ou une extension pour une adresse universelle d'habillage de vue.

9. Procédé de la revendication 8, dans lequel le versitcard est un versitcard à langage de balisage hypertexte.

10. Procédé de l'une quelconque des revendications 1 à 9, dans lequel l'étape de création utilise des informations intégrées au carnet d'adresses.

11. Procédé de la revendication 10, dans lequel les informations comprennent un réseau social auquel l'utilisateur appartient et/ou un calendrier de l'utilisateur.

12. Procédé de l'une quelconque des revendications 1 à 11, dans lequel l'étape de création insère une zone de temps pour le propriétaire d'adresse dans la ou les plusieurs identités externes.

13. Procédé de l'une quelconque des revendications 1 à 12, dans lequel l'application de carnet d'adresses est située sur un dispositif mobile (1430), comprenant en outre l'étape de synchronisation d'une application de carnet d'adresses à commande réseau avec l'application de carnet d'adresses.

14. Procédé de l'une quelconque des revendications 1 à 12, dans lequel l'application de carnet d'adresses est une application à commande réseau, comprenant en outre l'étape de synchronisation d'une application de carnet d'adresses située sur un dispositif mobile (1430) avec l'application de carnet d'adresses.

15. Procédé de l'une quelconque des revendications 1 à 14, dans lequel la ou les plusieurs identités externes (1330) sont stockées dans une mémoire interne ou externe d'un dispositif mobile (1430).

16. Dispositif mobile (1430) adapté pour exécuter une application de carnet d'adresses afin de gérer plusieurs identités externes (1330) d'un utilisateur, le dispositif mobile (1430) comprenant :
un module de traitement adapté pour créer une ou plusieurs identités externes (1330) pour l'utilisateur, chaque identité externe comportant
au moins un champ de carnet d'adresses et une valeur correspondante ;
un module de communications adapté pour transmettre la ou les plusieurs identités externes à une partie de réception et adapté pour recevoir des identités externes (1330) à partir d'une troisième partie ; et
un module de présentation adapté pour présenter une identité sélectionnée à partir desdites identités externes (1330) reçues par la mise à jour de manière dynamique d' au moins l'un(e) du champ de carnet d'adresses et de la valeur correspondante sur la base d'au moins l'un(e) de l'heure locale et d'un état de la troisième partie pour faciliter la communication entre l'utilisateur et la partie de réception.

17. Dispositif mobile (1430) de la revendication 16, dans lequel le module de présentation est en outre adapté pour présenter la ou les plusieurs identités externes (1330) à la troisième partie.

18. Dispositif mobile (1430) de la revendication 16 ou 17, dans lequel la ou les plusieurs identités externes (1330) correspond/correspondent à une classification de destinataires par l'utilisateur.

19. Dispositif mobile (1430) de l'une des revendications 16 à 18, dans lequel la ou les plusieurs identités externes (1330) est/sont créée(s) sur la base de l'état d'une partie de demande.

20. Dispositif mobile (1430) de l'une quelconque des revendications 16 à 19, dans lequel le carnet d'adresses électronique est adapté pour déterminer un état de l'utilisateur sur la base d'un état de présence de l'utilisateur, d'un emplacement de l'utilisateur et/ou d'un réseau auquel l'utilisateur est connecté.

21. Dispositif mobile (1430) de la revendication 20, dans lequel le module de communications est en outre adapté pour transmettre l'état de l'utilisateur à la partie de réception.

22. Dispositif mobile (1430) de l'une des revendications 16 à 21, dans lequel le module de communications est en outre adapté pour recevoir un état de la troisième partie.

23. Dispositif mobile (1430) de l'une quelconque des revendications 16 à 22, dans lequel le module de traitement comprend un module d'authentification (144), un module de transformation (1446) et un module de règles (1448).

24. Dispositif mobile (1430) de la revendication 23, dans lequel le module de transformation (1446) est adapté pour appliquer un masque aux au moins un champ de carnet d'adresses et une valeur correspondante.

25. Dispositif mobile (1430) de la revendication 23 ou 24, dans lequel le module de règles (1448) est adapté pour appliquer un contexte aux au moins un champ de carnet d'adresses et une valeur correspondante.

26. Support lisible par ordinateur stockant des instructions lisibles par ordinateur pouvant être exécutées par un processeur d'un dispositif informatique pour amener ledit dispositif à mettre en oeuvre les étapes du procédé de l'une quelconque des revendications 1 à 15.
